# EUROPÄISCHE PATENTSCHRIFT

(11) **EP 2 379 573 B1**
(45) Veröffentlichungstag und Bekanntmachung des Hinweises auf die Patenterteilung: **11.12.2013**
(21) Anmeldenummer: 09795916.7
(22) Anmeldetag: 15.12.2009
(51) Int. Cl.: C07F 9/30, C07F 9/48, C08K 5/53, C09K 21/12

(54) **VERFAHREN ZUR HERSTELLUNG VON ETHYLENDIALKYLPHOSPHINSÄUREN, -ESTERN UND -SALZEN MITTELS ACETYLEN UND IHRE VERWENDUNG**
PROCESS FOR PREPARING ETHYLENEDIALKYLPHOSPHINIC ACIDS, ESTERS AND SALTS BY MEANS OF ACETYLENE AND USE THEREOF
PROCÉDÉ DE PRODUCTION D'ACIDES ÉTHYLÈNE-DIALKYLPHOSPHINIQUES, DE LEURS ESTERS ET DE LEURS SELS AU MOYEN D'ACÉTYLÈNE ET LEUR UTILISATION

(30) Priorität: 18.12.2008 DE 102008063626
(43) Veröffentlichungstag der Anmeldung: 26.10.2011
(73) Patentinhaber: Clariant Finance (BVI) Limited, Road Town, Tortola (VG)
(72) Erfinder: HILL, Michael, 22043 Hamburg (DE); KRAUSE, Werner, 50354 Hürth (DE); SICKEN, Martin, 51149 Köln (DE)
(74) Vertreter: Hütter, Klaus
(86) Internationale Anmeldenummer: PCT/EP2009/008964
(87) Internationale Veröffentlichungsnummer: WO 2010/069545

(56) Entgegenhaltungen:
- EP-A2- 1 607 400
- WO-A1-2008/043499
- DE-A1- 2 236 036
- SU-A1- 314 758
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- FRANCISCO ALONSO, IRINA P. BELETSKAYA, AND MIGUEL YUS: "Transition-Metal Catalyzed Addition of Heteroatom-Hydrogen Bonds to Alkynes" CHEM. REV., 2004, XP002556525
- NIFANT'EV E E ET AL: "Reactions of acetylenes with hypophosphorous and phosphonous acids" JOURNAL OF GENERAL CHEMISTRY USSR, CONSULTANTS BUREAU, NEW YORK, NY, US, Bd. 56, Nr. 4, 20. September 1986 (1986-09-20), Seiten 680-688, XP002165520 ISSN: 0022-1279 & DATABASE BEILSTEIN [Online] BEILSTEIN INSTITUTE FOR ORGANIC CHEMISTRY, FRANKFURT-MAIN, DE; März 2009 (2009-03), Database accession no. Reaction ID 3851122, 1915900, 1917638
- KABACHNIK M.I. ET AL.: "Synthesis and properties of some Ethylenediphosphoryl compounds" BULLETIN OF THE ACADEMY OF SCIENCES OF THE USSR, (ENGLISH TRANSLATION), Bd. 23, 1974, Seiten 2205-2209, XP002557075
- ISSLEIB, K. ET AL.: "Synthese und Reaktionsverhalten der Äthylen-bis-organophosphine" CHEMISCHE BERICHTE, Bd. 101, 1968, Seiten 2197-2202, XP009126251
- PUDOVIK, A.N; SHULYNDIA, O.S.: J. GEN. CHEM. USSR, Bd. 39, Nr. 5, 1969, Seiten 986-988, XP009126232
- MASTALERZ, P. ET AL.: ROCZNIKI CHEMII ANN. SOC. CHIM. POLONORUM, Bd. 38, 1964, Seiten 1529-1531, XP009126233
- MASTALERZ, P.: "Synthesis of some ethylene-(P,P'-Dialkyl)-diphosphinic acids as new potential antimetabolics of succinic acids" ROCZNIKI CHEMII ANN. SOC. CHIM. POLONORUM, Bd. 38, 1964, Seiten 61-66, XP009126234
- DATABASE BEILSTEIN [Online] BEILSTEIN INSTITUTE FOR ORGANIC CHEMISTRY, FRANKFURT-MAIN, DE; 1967, XP002557076 gefunden im xfire Database accession no. BRN 3110535 & BRATKOWSKI, T. ET AL.: ROCZNIKI CHEMII ANN. SOC. CHIM. POLONORUM, Bd. 41, 1967, Seiten 471-477,
- DATABASE BEILSTEIN [Online] BEILSTEIN INSTITUTE FOR ORGANIC CHEMISTRY, FRANKFURT-MAIN, DE; 1997, Kurdyumova, N.R. et al.: XP002557077 Database accession no. BRN 8075738 & KURDYUMOVA, N.R. ET AL.: J. GEN. CHEM. USSR, Bd. 67, Nr. 12, 1997, Seiten 1857-1860,
- RUFLIN CATHERINE ET AL: "Tetrakis(trimethysilyl)hypophosphate P2O2(OTMS)4: Synthesis, reactivity and application as flame retardant" HETEROATOM CHEMISTRY, VCH PUBLISHERS, DERFIELD BEACH, FL, US LNKD- DOI:10.1002/HC.20373, Bd. 18, Nr. 7, 6. November 2007 (2007-11-06), Seiten 721-731, XP009118331 ISSN: 1042-7163

## Beschreibung

Die Erfindung betrifft ein Verfahren zur Herstellung von Ethylendialkylphosphinsäuren, -estern und -salzen mittels Acetylen und ihre Verwendung.

Ethylendiphosphinsäuren sind vom Stand der Technik her grundsätzlich bekannt. So beschreiben DE-A-199 12 920 und WO-A-0 157 050 Phosphinsäuren des Typs H-P(O)(OX)-[CH₂CH₂-P(O)(OX)]ₙH mit X gleich H, Metall oder eine Alkylgruppe und n größer als 1. Diese Phosphinsäuren sind oligomer oder polymer. Sie werden durch Verfahren hergestellt, die Telomere erzeugen, die jedoch keinen gezielten Zugang zu Phosphinsäuren mit spezifischer Kettenlänge zulassen.

Organische Phosphinsäuren, deren Salze und Ester sind als Flammschutzmittel bekannt. So beschreibt die EP 0 699 708 A1 flammgeschützte Polyesterformmassen, wobei die Polyesterformmassen durch den Zusatz von Calcium- oder Aluminiumsalzen von Phosphin- oder Diphosphinsäuren flammfest ausgerüstet werden. Die vorgenannten Salze werden durch Umsetzung der entsprechenden Phosphinsäuren mit Calcium- oder Aluminiumhydroxid erhalten.

Aufgrund ihres hohen Phosphorgehaltes und ihrer Zweizähnigkeit werden die Diphosphinsäuren als sehr effektive reaktive Flammschutzmittel für Polyester, z. B. für Textil-Anwendungen, beschrieben. Dies gilt besonders für die Ethylenbis(methylphos-phinsäure), speziell in Form ihres Glykolesters (DE 22 36 037 A1).

Die Herstellung der Ethylenbis(methylphosphinsäure) ist technisch sehr aufwendig und erfolgt beispielsweise durch eine Arbuzov-Reaktion von Methylphosphonigsäure-diisopropylester hergestellt aus Methylphosphonigsäuredichlorid durch Umsetzung mit Alkoholen mit Ethylenbromid [P. Mastalerz, Rocziniki Chem 38 (1964), Seite 61-64] und anschließende Esterspaltung.

Dialkylphosphinsäuren sind Gegenstand verschiedener Abhandlungen, so beschreibt J.L. Montchamp in Journal of Organometallic Chemistry, Bd. 690, Nr. 10, 16.05.2005, Seiten 2388 - 2406 die Synthese von Phosphinsäurederivaten, ausgehend von hypophosphorigen Verbindungen. Dabei werden - Palladium-katalysiert - in einem flüssigen System Olefine mit mindestens 8 C-Atomen an die hypophosphorige Verbindung addiiert.

Ähnlich wird nach S. Depréle et al., J. Am. Chem. Soc., Bd. 124, Nr. 32, 01.01.2002, Seite 9387, hypophosphorige Säure in wässriger Form mit Olefinen, die mindestens 8 C-Atome aufweisen oder mit Alkinen, die ebenfalls mindestens 8 C-Atome aufweisen zu den entsprechenden P-Verbindungen, die dann ebenfalls mindestens 8 C-Atome enthalten, umgesetzt.

In Tetrahedron Lett., Bd. 48, Nr. 33, 19.07.2007, Seiten 5755 - 5759 (Bravo-Altamirano et al.) wird die Palladium-katalysierte Herstellung von allylgruppenhaltigen Phosphinsäuren beschrieben, bei dem Alkine bzw. Alkene mit mehr als 7 C-Atomen mit phosphoriger Säure umgesetzt werden.

Die Reaktion von ausschließlich hypophosphoriger Säure in flüssiger Form mit Kohlenstoffverbindungen, die mindestens 8 C-Atome aufweisen und eine C = C-oder C ≡ C-Verbindung enthalten, wird durch S. Depréle et al., in Org. Lett., Bd. 6, Nr. 21, 01.01.2004, Seiten 3805 - 3808 beschrieben. Erhalten werden P-Verbindungen, die eine Alkylgruppe mit mindestens 8 C-Atomen aufweisen.

P. Ribière et al., J. Org. Chem., Bd. 70, Nr. 10, 01.01.2005, Seiten 4064 - 4072 beschreiben die Nickel-katalysierte Hydrophosphorylierung von Phosphinsäuren mit verschiedenen Olefinen, insbesondere mit 1-Octen sowie die Synthese von Alkenyl-H-Phosphinaten, die eine C = C-Bindung aufweisen.

Die DE 23 02 523 A1 beschreibt die Umsetzung von Alkylphosphonigsäureestern mit Ethin (Acetylen) und die anschließende Spaltung des entstandenen Diesters mit HCl unter Bildung von Alkylchloriden. Auch die hier eingesetzten Alkylphosphonigsäureester werden aus den entsprechenden Phosphonigsäuredihalogeniden hergestellt.

Die vorgenannten Verfahren weisen u. a. den Nachteil auf, dass sie als letzten Schritt die technisch schwierige Spaltung der entsprechenden Ester vorsehen und somit nur sehr aufwendig durchzuführen sind. Es werden zudem halogenhaltige Nebenprodukte gebildet, die, wie zum Teil auch die vorgenannten Ausgangsprodukte selbst, giftig, selbstentzündlich und/oder korrosiv, also höchst unerwünscht sind.

Bisher fehlt es an Verfahren zur Herstellung von Ethylendialkylphosphinsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Diese Aufgabe wird gelöst durch ein Verfahren zur Herstellung von Ethylendialkylphos-phinsäuren, -estern und -salzen, dadurch gekennzeichnet, dass man
a) eine Phosphinsäurequelle (I) 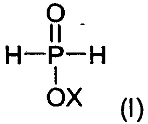 mit Olefinen (IV) 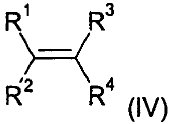 in Gegenwart eines Katalysators A zu einer Alkylphosphonigsäure, deren Salz oder Ester (II) 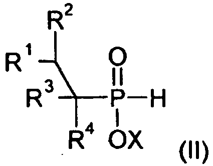 umsetzt,
b) die so entstandene Alkylphosphonigsäure, deren Salz oder Ester (II) mit einer acetylenischen Verbindung (V) 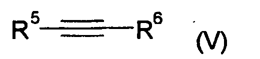 in Gegenwart eines Katalysators B zum Ethylendialkylphosphinsäurederivat (III) 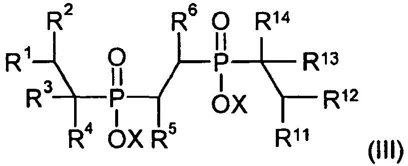 umsetzt, die nach Schritt a) erhaltene Alkylphosphonigsäure, deren Salz oder Ester (II) und/oder die nach Schritt b) erhaltene Ethylendialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II) und/oder Ethylendialkylphosphinsäureester (III) den weiteren Reaktionsschritt b) unterwirft, wobei R¹, R², R³, R⁴, R⁵, R⁶, R¹¹, R¹², R¹³, R¹⁴ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl, wobei die Gruppen C₆-C₁₈-Aryl, C₆-C₁₈-Aralkyl und C₆-C₁₈-Alkyl-Aryl mit SO₃X₂, -C(O)CH₃, OH, CH₂OH, NH₂, NO₂, OCH₃, SH und/oder OC(O)CH₃ substituiert.sein können, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, (CH₂)ₘSiMe₃, C(O)R⁷, CH=CH-R⁷, CH=CH-C(O)R⁷ bedeuten und wobei R⁷ für C₁-C₈-Alkyl oder C₆-C₁₈-Aryl steht und m eine ganze Zahl von 0 bis 10 bedeutet und X für H, C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂ steht wobei k eine ganze Zahl von 0 bis 10 ist und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht und es sich bei dem Katalysator A um Übergangsmetalle und/oder

Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen handelt.

Bevorzugt wird die nach Schritt b) erhaltene Ethylendialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierten Stickstoffbase zu den entsprechenden Ethylendialkylphosphinsäuresalzen (III) dieser Metalle und/oder einer Stickstoffverbindung umgesetzt.

Bevorzugt sind R¹, R², R³, R⁴, R⁵, R⁶, R¹¹, R¹², R¹³, R¹⁴ gleich oder verschieden und bedeuten unabhängig voneinander H, Methyl, Ethyl, n-Propyl, Isopropyl, n-Butyl, Isobutyl, tert. Butyl und/oder Phenyl.

Bevorzugt ist X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der siebten und achten Nebengruppe.

Bevorzugt handelt es sich bei den Übergangsmetallen und/oder Übergangsmetallverbindungen um Rhodium, Nickel, Palladium, Ruthenium und/oder Platin. Bevorzugt hanelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei den acetylenischen Verbindungen (V) um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin-1-ol, 1-Octin-3-ol, 1-Pentin, Phenylacetylen und/oder Trimethylsilylacetylen.

Bevorzugt handelt es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von Ethylendialkylphosphinsäuren, -estern und -salzen, nach einem oder mehreren der Ansprüche 1 bis 9 und die anschließende Verwendung dieser Produkte als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch-und Reinigungsmittelanwendungen und in Elektronikanwendungen.

Die Erfindung betrifft ebenfalls die Herstellung von Ethylendialkylphosphinsäuren, -salzen und -estern (III), nach einem oder mehreren der Ansprüche 1 bis 9 und die anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung betrifft auch die Herstellung von Ethylendialkylphosphinsäuren, -estern und -salzen, hergestellt nach einem oder mehreren der Ansprüche 1 bis 9 und die anschließende Verwendung dieser Produkte als Flammschutzmittel beim Herstellen oder Aushärten von Epoxidharzen, Polyurethanen und ungesättigten Polyesterharzen für Elektronikanwendungen.

Bevorzugt liegen dabei die Epoxyharze, Polyurethane und ungesättigten Polyesterharze als Polymerformkörper vor.

Bevorzugt enthalten Polymerformkörper weiterhin Härter, UV-Stabilisatoren, Flexibilisatoren und/oder andere Zusätze.

Bevorzugt entsprechen die Ethylendialkylphosphinsäuren der Formel (III) 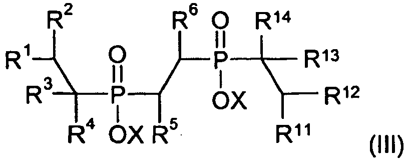 worin R¹, R², R³, R⁴, R⁵, R⁶, R¹¹, R¹², R¹³, R¹⁴ gleich oder verschieden sind und unabhängig voneinander H, C₁-C₁₈-Alkyl bedeuten und X die gleiche Bedeutung wie in Anspruch 1 hat.

Besonders bevorzugt handelt es sich bei der Ethylendialkylphosphinsäure um Ethylendiethylphosphinsäure.

Die Erfindung betrifft auch eine flammgeschützte thermoplastische oder duroplastische Polymerformmasse, enthaltend 0,5 bis 45 Gew.-% Ethylendialkylphosphinsäuren, -salze oder -ester (III), die nach einem oder mehreren der Ansprüche 1 bis 9 hergestellt wurden, 0,5 bis 99 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Schließlich betrifft die Erfindung zudem flammgeschützte thermoplastische oder duroplastische Polymer-Formkörper, -Filme, -Fäden und -Fasern, enthaltend 0,5 bis 45 Gew.-% Ethylendialkylphosphinsäuren, -salze oder -ester (III), die nach einem oder mehreren der Ansprüche 1 bis 9 hergestellt wurden, 0,5 bis 99 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt ist m = 1 bis 10 und k = 2 bis 10.

Bevorzugt wird das Katalysatorsystem A durch Umsetzung von einem Übergangsmetall und/oder einer Übergangsmetallverbindung und mindestens einem Liganden gebildet.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Bevorzugt ist R¹¹ = R¹, R¹² = R², R¹³ = R³ und R¹⁴ = R⁴.

Handelt es sich bei der Ethylendialkylphosphinsäure (III) nach Schritt c) um einen Ester, so kann bevorzugt eine saure oder basische Hydrolyse durchgeführt werden, um die freie Ethylendialkylphosphinsäure oder deren Salz zu erhalten.

Bevorzugt bedeutet m 1 bis 10 und k 2 bis 10.

Bevorzugt handelt es sich bei der Ethylendialkylphosphinsäure um Ethylenbis(ethyl-phosphinsäure), Ethylenbis(propylphosphinsäure), Ethylenbis(i-propylphosphinsäure), Ethylenbis(butylphosphinsäure), Ethylenbis(sec-propylphosphinsäure), Ethylenbis(i-propylphosphinsäure), Ethylenbis(i-butylphosphinsäure), Ethylenbis(2-phenylethylphos-phinsäure).

Bevorzugt handelt es sich bei dem Ethylendialkylphosphinsäureester um einen Propionsäure-, Methyl-, Ethyl-; i-Propyl-; Butyl-, Phenyl-; 2-Hydroxyethyl-, 2-Hydroxypropyl-, 3-Hydroxypropyl-, 4-Hydroxybutyl- und/oder 2,3-Dihydroxypropylester der oben genannten Ethylendialkylphosphinsäuren.

Bevorzugt handelt es sich bei dem Ethylendialkylphosphinsäure-Salz um ein Aluminium(III)-, Calcium(II)-, Magnesium(II)-, Cer(III)-, Ti(IV)- und/oder Zink(II)salz der oben genannten Ethylendialkylphosphinsäuren.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthylsulfonat, Toluolsulfonat, t-Butylsulfonat, 2-Hydroxypropansulfonat und sulfonierte lonentauscherharze; und/oder organische Salze, wie etwa Acetyl-acetonate und Salze einer Carbonsäure mit bis zu 20 Kohlenstoffatomen, wie etwa Formiat, Acetat, Propionat, Butyrat, Oxalat, Stearat und Zitrat einschließlich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere der oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBand^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder der Übergangsmetalle stellen bevorzugt ebenfalls deren Komplexverbindungen dar. Komplexverbindungen der Metallsalze und/oder der Übergangsmetalle setzen sich aus den Metallsalzen bzw. Übergangsmetallen und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopenta-dienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium, Platin, Nickel oder Rhodium, auf Alumina, auf Silika, auf Bariumcarbonat, auf Bariumsulfat, auf Calcium-carbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethyl-cyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-diisopropylphenyl)imidazoliden)(3-chloro-pyridyl)-, 2'-(Dimethylamino)-2-biphenylyl-, Dinorbornylphosphin-, 2-(Dimethylaminomethyl)ferrocen-, Allyl-, Bis(Diphenylphosphino)butan-, (N-succinimidyl)bis-(triphenyl-phosphin)-, Dimethylphenylphosphin-, Methyldiphenylphosphin-, 1,10-Phenanthrolin-, 1,5-Cyclooctadien-, N,N,N',N'-Tetramethylethylendiamin-, Triphenyl-phosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(diphenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butyliso-cyanid)-, 2-Methoxyethylether-, Ethylenglycoldimethylether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methylallyl)palladium(II)chlorid Dimer, Bis(dibenzylidenaceton)palladium(0), Tris(dibenzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphosphin)palladium(0), meso-Tetraphenyltetrabenzoporphin Palladium, Tetrakis(methyldiphenylphosphin)palladium(0), Tris(3,3',3"-phophinidyntris(benzolsulfonato)palla-dium(0) Nonanatriumsalz, 1,3-Bis(2,4,6-trimethylphenyl)-imidazol-2-yliden(1,4-naphtho-quinon)palladium(0), 1,3-Bis(2,6-diisopropylphenyl)-imidazol-2-yliden(1,4-naphtho-quinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyanonickelat(II), Kaliumnickel(IV)paraperiodat, Dilithiumtetrabromonickelat(II), Kaliumtetracyanonickelat(II); Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VI)

PR⁸₃ (VI)

in der die Reste R⁸ unabhängig voneinander für Wasserstoff, geradkettiges, verzweigtes oder cyclisches C₁-C₂₀-Alkyl, C₆-C₂₀-Alkylaryl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R⁹ substituiertes Phenyl- oder durch wenigstens ein R⁹ substituiertes Naphtyl stehen. R⁹ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹⁰)M, -CO₂M, -PO₃M₂, -AsO₃M₂, -SiO₂M, -C(CF₃)₂OM (M = H, Li, Na oder K), wobei R¹⁰ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₆-C₂₀-Arylalkyl, C₆-C₂₀-Alkylaryl, Phenyl und/oder Biphenyl bedeutet. Vorzugsweise sind alle Gruppen R⁸ identisch.

Geeignete Phosphine (VI) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethylammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R⁸M"-Z-M" R⁸ (VII).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R⁸ repräsentiert unabhängig voneinander die unter Formel (VI) beschrieben Reste. Vorzugsweise sind alle Gruppen R⁸ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxyd i-2,1-phenylen-Reste.

Geeignete bidentate Phosphinliganden (VII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(di-cyclohexyl-), 1,3-Bis(diisopropyl-), 1,3-Bis(di-tert.-butyl-) und 1,3-Bis(diphenylphos-phino)propan; 1,4-Bis-(diisopropyl-) und 1,4-Bis(diphenylphosphino)butan; 1,5-Bis(di-cyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3-Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenyl-phosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphospholano)benzol, 2,3-O-Isopropropyliden-2,3-dihydroxy-1,4-bis(diphenyl-phosphino)butan, 2,2'-Bis(di-tert.-butylphosphino)-1,1'-biphenyl, 2,2'-Bis(dicyclo-hexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethyl-amin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphos-phino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonato-phenyl)porphin, Meso-tetrakis(3-sulfonatomesityl)porphin, Tetrakis(4-carboxy-phenyl)porphin und 5,11,17,23-Sulfonato-25,26,27,28-tetrahydroxycalix[4]aren.

Zudem können die Liganden der Formel (VI) und (VII) durch die Reste R⁸ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) und c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z.B. Destillation, Filtration und/oder Extraktion abgetrennt.

Bevorzugt erfolgt die Umsetzungen in den Verfahrensstufen a), b) und c) wahlweise in Absorptionskolonnen, Sprühtürmen, Blasensäulen, Rührkesseln, Rieselbettreaktoren, Strömumgsrohren, Schlaufenreaktoren und/oder Knetern. Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der Katalysator A während der Umsetzung homogen und/oder heterogen.

Bevorzugt wird der Katalysator A vor der Umsetzung und/oder zu Beginn der Umsetzung und/oder während der Umsetzung in situ generiert.

Bevorzugt wirkt der jeweils heterogen wirkende Katalysator während der Umsetzung als Suspension oder an eine feste Phase gebunden.

Die erfindungsgemäßen Reaktionen können in flüssiger Phase, in der Gasphase oder in überkritischer Phase durchgeführt werden. Dabei wird der Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z.B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlen-wasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinyl-ether, Tetrahydrofuran, Triisopropyl-ether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylen-glycolmonobutylether, Triethylen-glycoldimethylether (Triglyme), Triethylenglycol-monomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und/oder 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, Vanadiumphosphat Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, QuadraSil™; funktionalisierte Polysiloxane wie etwa Deloxan^{®}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, Ionentauscher wie etwa Amberlite™, Amberjet™, Ambersep™, Dowex^{®}, Lewatit^{®}, ScavNet^{®}; funktionalisierte Polymere wie etwa Chelex^{®}, QuadraPure™, Smopex^{®}, PolyOrgs^{®}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Die Veresterung der Ethylendialkylphosphinsäure (III) bzw. der Alkylphosphonigsäure-derivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylenglykol, 1,3-Propylenglykol, 1,4-Butandiol, 2,2-Dimethylpropan-1,3-diol, Neopentylglykol, 1,6-Hexandiol, 1,4-Cyclohexandimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxyethanol, 2-(2'-Ethylhexyloxy)-ethanol, 2-n-Dodecoxy-ethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100-1.000 g/mol, besonders bevorzugt von 150-350 g/mol.

Bevorzugt sind als M-OH und M'-OH auch Umsetzungsprodukte von Ethylenoxid mit Poly-1,2-propylen-glykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100-1.000 g/mol, besonders bevorzugt von 150-450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungsprodukte von Ethylenoxid mit Stickstoffverbindungen sind Triethanolamin, Methyldiethanolamin, n-Butyldiethanolamin, n-Dodecyldiethanolamin, Dimethylethanolamin, n-Butylmethylethanolamin, Di-n-butylethanolamin, n-Dodecylmethylethanolamin, Tetrahydroxyethylethylendiamin oder Pentahydroxyethyl-diethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole M-OH, M'-OH und die Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH, M'-OH und Alkylenoxids und/oder des Lösungsmittels durchgeführt.

Bevorzugt erfolgt die Umsetzung bei einem Partialdruck des eingesetzten Alkohols M-OH, M'-OH und Alkylenoxids von 0,01 - 100 bar, besonders bevorzugt bei einem Partialdruck des Alkohols von 0,1 - 10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. Ethylendialkylphosphinsäure (III) von 10.000:1 bis 0,001:1, besonders bevorzugt im Verhältnis von 1.000:1 bis 0,01:1.

Bevorzugt erfolgt die Umsetzung in einem Molverhältnis der Phosphinsäurequelle (I) bzw. Alkylphosphonigsäure (II) bzw. Ethylendialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Besonders bevorzugte Katalysatoren B , wie sie in der Verfahrensstufe b) eingesetzt werden, sind Peroxo-Verbindungen wie Peroxomonoschwefelsäure, Kaliummono-persulfat (Kaliumperoxomonosulfat), Caroat^{™}, Oxone^{™}, Peroxodischwefelsäure, Kaliumpersulfat (Kaliumperoxodisulfat), Natriumpersulfat (Natriumperoxodisulfat), Ammoniumpersulfat (Ammoniumperoxodisulfat). Bevorzugte Katalysatoren B sind zudem Verbindungen, die im Lösemittelsystem Peroxide bilden können wie Natriumperoxid, Natriumperoxidediperoxohydrat, Natriumperoxiddiperoxohydrathydrat, Natriumperoxidedihydrat, Natriumperoxidocta-hydrat, Lithiumperoxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborat-trihydrat, Natriumperoxoboratmonohydrat, wasserfreies Natrium peroxoborat, Kaliumperoxoboratperoxohydrat, Magnesiumperoxoborat, . Calciumperoxoborat, Bariumperoxoborat, Strontiumperoxoborat, Kaliumperoxoborat, Peroxomonophos-phorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Hamstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatdiperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind auch Wasserstoffperoxid, Perameisensäure, Peressigsäure, Benzoylperoxid, Di-tert-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, tert-Butylhydroperoxid, Acetylacetonperoxid, Methylethylketonperoxid, Bemsteinsäureperoxid, Dicetylperoxydicarbonat, tert-Butylperoxyacetat, tert-Butylperoxymaleinsäure, tert-Butylperoxybenzoat, Acetylcyclohexylsulfonylperoxid.

Bevorzugte Katalysatoren B sind auch wasserlösliche Azo-Verbindungen. Besonders bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexane-1-carbonitril), VAZO^{®} 68 der Fa. Dupont-Biesteritz, V-70 2,2'-Azobis(4-methoxy-2,4-dimethyl valeronitril), V-65 2,2'-Azobis(2,4-dimethyl-valeronitril), V-601 Dimethyl 2,2'-azobis(2-methylpropionat), V-59 2,2'-Azobis(2-methylbutyronitril), V-40 1,1'-Azobis(cyclohexane-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-046B 2,2'-Azobis[2-(2-imidazolin-2-yl)propandisulfatedi-hydrate, VA-057 2,2'-Azobis[N-(2-carboxyethyl)-2-methylpropionamidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazodi-isobutyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butylper-oxy)butan, Ethyl-3,3-bis(tert-butylperoxy)butyrat, 1,1-Di-(tert-butylperoxy)cyclohexan.

Bevorzugt wird der Katalysator B in Mengen von 0,05 bis 5 Mol-% bezüglich der jeweiligen acetylenischen Verbindung (V) eingesetzt.

Bevorzugt wird der Katalysator B in Mengen von 0,001 bis 10 Mol-%, bezogen auf die phosphorhaltige Verbindung, eingesetzt.

Bevorzugt wird der Katalysator B während der Reaktion kontinuierlich zudosiert.

Bevorzugt wird der Katalysator B während der Reaktion in Form einer Lösung in der acetylenischen Verbindung (V) kontinuierlich zudosiert.

Bevorzugt wird der Katalysator B während der Reaktion in Form einer Lösung im verwendeten Lösungsmittel kontinuierlich zudosiert.

Bevorzugt handelt es sich bei den acetylenischen Verbindungen (V) um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin-1-ol, 1-Octin-3-ol, 1-Pentin, Phenylacetylen, Trimethylsilyl-acetylen.

Geeignete Lösungsmittel sind die für Schritt a) genannten Lösungsmittel.

Bevorzugt erfolgt die Umsetzung der Alkylphosphonigsäuren (II) mit der acetylenischen Verbindung (V) bei einer Temperatur von 0 bis 250 °C, besonders bevorzugt bei einer Temperatur von 20 bis 200 °C und insbesondere bei einer Temperatur von 50 bis 150 °C.

Bevorzugt besteht die Atmosphäre bei der Umsetzung mit der acetylenischen Verbindung (V) zu 50 bis 99,9 Gew.-% aus Bestandteilen des Lösungsmittels und der acetylenischen Verbindung (V), bevorzugt 70-95 %.

Bevorzugt erfolgt die Umsetzung während des Zusatz der acetylenischen Verbindung (V) bei einem Druck von 1 -20 bar.

Der Gegenstand der vorliegenden Erfindung umfasst insbesondere auch ein Verfahren, bei dem man eine Alkylphosphonigsäure (II) mit einer acetylenischen Verbindung (V) in Gegenwart eines Katalysators B umsetzt und diese kontinuierlich aus dem Reaktionsgemisch durch Umlauf-Filtration entfernt und ebenso kontinuierlich die verbrauchte Alkylphosphonigsäure (II) durch neue ersetzt.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe
a) erhaltene Produktgemisch aufgearbeitet und danach die nach Verfahrensstufe
b) erhaltenen Ethylendialkylphosphinsäuren und/oder deren Ester und Alkalisalze in Verfahrensstufe c) umgesetzt.

Die Ethylendialkylphosphinsäure oder deren Salz (III) kann im Folgenden zu weiteren Metallsalzen umgesetzt werden.

Bevorzugt handelt es sich bei den eingesetzten Metallverbindungen der Verfahrensstufe c) um Verbindungen der Metalle Mg, Ca, Al, Sb, Sn, Ge, Ti, Fe, Zr, Zn, Ce, Bi, Sr, Mn, Li, Na, K, besonders bevorzugt Mg, Ca, Al, Ti, Zn, Sn, Ce, Fe.

Geeignete Lösungsmittel für Verfahrensstufe c) sind die, wie sie weiter vorne in Verfahrensstufe a) eingesetzt werden.

Bevorzugt erfolgt die Umsetzung der in Verfahrensstufe c) in wässrigem Medium.

Bevorzugt setzt man in Verfahrensstufe c) die nach Verfahrensstufe b) erhaltenen Ethylendialkylphosphinsäuren, deren Ester und/oder Alkalisalze (III) mit Metallverbindungen von Mg, Ca, Al, Zn, Ti, Sn, Zr, Ce oder Fe zu den Ethylendialkylphosphinsäuresalzen (III) dieser Metalle um.

Die Umsetzung erfolgt dabei in einem Molverhältnis von Ethylendialkylphosphinsäure/ -ester/-salz (III) zu Metall von 8 zu 1 bis 1 zu 8 (für vierwertige Metallionen oder Metalle mit stabiler vierwertiger Oxidationsstufe), von 6 zu 1 bis 1 zu 6 (für dreiwertige Metallionen oder Metalle mit stabiler dreiwertiger Oxidationsstufe), von 4 zu 1 bis 1 zu 4 (für zweiwertige Metallionen oder Metalle mit stabiler zweiwertiger Oxidationsstufe) und von 3 zu 1 bis 1 zu 6 (für einwertige Metallionen oder Metalle mit stabiler einwertiger Oxidationsstufe).

Bevorzugt führt man in Verfahrenstufe b) erhaltenes Ethylendialkylphosphinsäureester/ -salz (III) in die entsprechende Ethylendialkylphosphinsäure über und setzt in Verfahrensstufe c) diese mit

Metallverbindungen von Mg, Ca, Al, Zn, Ti, Sn, Zr, Ce oder Fe zu den Ethylendialkylphosphinsäuresalzen (III) dieser Metalle um.

Bevorzugt wandelt man in Verfahrenstufe b) erhaltene Ethylendialkylphosphinsäure/ -ester (III) in ein Ethylendialkylphosphinsäure-Alkalisalz um und setzt in Verfahrensstufe c) dieses mit Metallverbindungen von Mg, Ca, Al, Zn, Ti, Sn, Zr, Ce oder Fe zu den Ethylendialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe c) um Metalle, Metalloxide, -hydroxide, -oxidhydroxide, -borate, -carbonate, -hydroxocarbonate, -hydroxocarbonathydrate, gemischte -hydroxocarbonate, - gemischte hydroxocarbonathydrate, -phosphate, -sulfate, -sulfat-hydrate, -hydroxosulfathydrate, gemischte -hydroxosulfathydrate, -oxysulfate, -acetate, -nitrate, -fluoride, -fluoridhydrate, -chloride, chloridhydrate, -oxychloride, -bromide, -iodide, -iodidhydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, Aluminiumfluorid, -hydroxychlorid, -bromid, -iodid, -sulfid, -selenid; -phosphid, -hypophosphit, -antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxy-verbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -stearat, -trifluoromethansulfonat, -benzoat, -salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auch Zinkborat, -carbonat, -hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid bevorzugt.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Die Umsetzung in Verfahrensstufe c) erfolgt bei einem Feststoffgehalt der Ethylendi-alkylphosphinsäuresalze von 0,1 bis 70 Gew.-%, bevorzugt 5 bis 40 Gew.-%.

Die Umsetzung in Verfahrensstufe c) erfolgt bei einer Temperatur von 20 bis 250 °C, bevorzugt bei 80 bis 120 °C.

Die Umsetzung in Verfahrensstufe c) bei einem Druck zwischen 0,01 und 1.000 bar, bevorzugt bei 0,1 bis 100 bar.

Bevorzugt erfolgt die Umsetzung in Verfahrensstufe c) während einer Reaktionszeit von 1*10⁻⁷ bis 1.000 h.

Bevorzugt wird das nach der Verfahrensstufe c) durch Filtrieren und/oder Zentrifugieren aus dem Reaktionsgemisch abgetrennte Ethylendialkylphosphinsäuresalz (III) getrocknet.

Bevorzugt wird das nach Verfahrensstufe b) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe b) und/oder c) im durch Stufe a) gegebenen Lösungsmittelsystem.

Bevorzugt ist die Umsetzung in Verfahrensstufe c) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a), b) und/oder c) erhaltene Produktgemisch aufgearbeitet.

In einer weiteren Ausführungsform des Verfahrens wird das nach Verfahrensstufe b) erhaltene Produktgemisch aufgearbeitet und danach die nach Verfahrensstufe b) erhaltenen Ethylendialkylphosphinsäuren und/oder deren Salze oder Ester (III) in Verfahrensstufe c) mit den Metallverbindungen umgesetzt.

Bevorzugt wird das Produktgemisch nach Verfahrensstufe b) aufgearbeitet, indem die Ethylendialkylphosphinsäuren und/oder deren Salze oder Ester (III) durch Entfernen des Lösungsmittelsystems isoliert werden, z. B. durch Eindampfen.

Bevorzugt weist das Ethylendialkylphosphinsäuresalz III der Metalle Mg, Ca, Al, Zn, Ti, Sn, Zr, Ce oder Fe wahlweise eine Restfeuchte von 0,01 bis 10 Gew.-%, bevorzugt von 0,1 bis 1 Gew.-%, eine mittlere Teilchengröße von 0,1 bis 2.000 µm, bevorzugt von 10 bis 500 µm, eine Schüttdichte von 80 bis 800 g/l, bevorzugt von 200 bis 700 g/l, eine Rieselfähigkeit nach Pfrengle von 0,5 bis 10, bevorzugt von 1 bis 5, auf.

Besonders bevorzugt enthalten die Formkörper, -Filme, -Fäden und -Fasern 5 bis 30 Gew.-% der Ethylendialkylphosphinsäure/-ester/-salze, hergestellt nach einem oder mehreren der Ansprüche 1 bis 9, 5 bis 80 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 0,1 bis 90 Gew.-% der Ethylendialkylphosphinsäure, -ester und -salze (III) und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachlorocyclopentadien-Addukte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen Ethylendialkylphosphinsäure, -ester und -salze (III) als Flammschutzmittel bzw. als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäßen Ethylendialkylphosphinsäuren und -ester oder aus der nach dem erfindungsgemäßen Verfahren hergestellten Ethylendialkylphosphinsäuren und -ester als Phosphor-enthaltende Kettenglieder zusammen. Die Phosphor enthaltenden Kettenglieder machen 2-20 Gew.-% der Dicarbonsäure-Komponente des Polyesters aus. Bevorzugt beträgt der resultierende Phosphorgehalt im Polyester 0,1-5 Gew.-%, besonders bevorzugt 0,5-3 Gew.-%.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt findet die Veresterung und/oder Umesterung bei der Polyesterherstellung bei Temperaturen von 100 - 300 °C statt, besonders bevorzugt bei 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 - 15, bevorzugt 0,9 - 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäure-imid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122,

Fa. DSM, ®Zytel 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Ethylendialkylphosphinsäure/-ester/-salze, hergestellt nach einem oder mehreren der Ansprüche 1 bis 11 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% Ethylendialkylphosphinsäuren, -salze oder -ester, die nach einem oder mehreren der Ansprüche 1 bis 11 hergestellt wurden, 5 bis 80 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die Ethylendialkylphosphinsäuren, -salze oder -ester, die nach einem oder mehreren der Ansprüche 1 bis 11 hergestellt wurden enthalten.

Zudem betrifft die Erfindung Polymer-Formmassen sowie Polymer-Formkörper, -Filme, -Fäden und -Fasern, enthaltend die erfindungsgemäß hergestellten Ethylendialkylphos-phinsäuresalze (III) der Metalle Mg, Ca, Al, Zn, Ti, Sn, Zr, Ce oder Fe.

Die Erfindung wird durch die nachstenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Die Wirksamkeit der Ethylendiethylphosphinsäure (der Formel (III)) wurde untersucht, indem Formulierungen entwickelt wurden, mit denen Polymerformkörper hergestellt werden konnten. Im Wesentlichen enthalten diese Formulierungen phosphormodifizierte Epoxidharze auf Basis von Ethylendialkylphosphinsäuren, Härter, Imidazol als Katalysator und optional Füllstoffe oder andere Inhaltsstoffe.

Für die Formulierungen bevorzugt eingesetzte Epoxidharze sind Bisglycidylether auf Basis von Bisphenol A, Bisphenol F und Bisphenol S (Umsetzungsprodukte dieser Bisphenole und Epichlorhydrin) oder deren Oligomere, Polygycidylether von Phenol/Formaldehyd-und/oder Kresol/Formalaldehyd-Novolake, die durch Umsetzung mit Ethylendialkylphosphinsäuren der Formel (III) flammwidrig eingestellt wurden.

Als Härter für die Epoxidharze können beispielsweise aliphatische, cycloaliphatische, aromatische und heterocyclische Amine oder Polyamine wie Diaminodiphenylmethan-Derivate, Diaminodiphenylether und Diaminodiphenylsulfone, wie Bis(4-aminophenyl)methan, Anilin-FormaldehydHarze, Bis(4-aminophenyl)sulfon, Ethylendiamin, Propan-1,3-diamin, Hexamethylendiamin, Diethylentriamin, Triethylentetramin, Aminoethylpiperazin, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,55-trimethylcyclohexylamin(Isophorondiamin), Polyamidoamine, Cyanguanidine, wie Dicyandiamid, Polyphenole, wie 2,2-Bis(4-hydroxyphenyl)propan (Bisphenol A), Kresol-Novolake, Phenol-Novolake und Bisphenol A-Novolake, Polycarbonsäuren und deren Anhydride, wie zum Beispiel Phthalsäureanhydrid, Maleinsäureanhydrid, Tetrahydrophthalsäureanhydrid eingesetzt werden. In den folgenden Beispielen wurden bevorzugt Bisphenol A-Novolake, Phenol-Novolake als Härter für das phosphormodifizierte Epoxidharz eingesetzt.

Bevorzugte Katalysatoren oder Beschleuniger zur Herstellung der Polymerformkörper sind Imidazole wie 1-Methyl-Imidazol, 2-Methylimidazol, 2-Ethyl-4-Methylimidazol, 2-Phenylimidazol, 2-Heptadecylimidazol und Amine wie Benzyldimethylamin oder N-Alkylpyridine. In den folgenden Beispielen wurde bevorzugt 2-Phenylimidazol als Beschleuniger verwendet.

Bevorzugte Ethylendialkylphosphinsäure der Formel (III) ist die Ethlyendiethylphosphinsäure.

Bevorzugt enthalten die in der Erfindung untersuchten flammwidrigen Epoxidharz-Formulierungen 0,1 bis 25 Masseteile Ethlyendiethylphosphinsäure der Formel (III) je 100 Masseteile Epoxidharz.

Weiterhin kann die Formulierung zusätzlich mindestens einen Füllstoff enthalten. Der Füllstoff kann anorganisch sein wie Kaolin, Talk, Quarzmehl, Siliziumdioxid, Kristobalit, Kreide, Schichtsilikate wie beispielsweise Bentonite oder Montmorillonite, Glimmerpulver, Glaspulver, Glasperlen, pulverisierte Glasfasern, Aluminiumoxid, Wollastonit und Magnesiumhydroxid oder organisch wie Polyamide, Polyethylen, Polyester oder gehärtete Epoxidharze. Andere Flammschutzmittel wie Aluminiumtrihydroxid, Melamin, Melaminderivate der Cyanursäure, Melaminderivate der Isocyanursäure, Melaminsalze wie Melaminphosphat, Melaminpolyphosphat oder Melamindiphosphat oder Ammoniumpolyphosphat, können ebenso verwendet werden.

Die erfindungsgemäße Formulierung kann auch andere Additive, die herkömmlich in Epoxidharz-Formulierungen eingesetzt werden, wie Pigmente, Farbstoffe und Stabilisatoren, enthalten.

Nach UL 94 ergeben sich folgende Brandklassen:

V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende

V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0 V-2: Zündung der Watte durch brennendes Abtropfen, übrige Kriterien wie bei V-1 Nicht klassifizierbar (nkl): erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

Eingesetzte Chemikalien und Abkürzungen

| | |
|---|---|
| VE-Wasser | voll-entsalztes Wasser |
| AIBN | Azo-bis-(isobutyronitril), (Fa. WAKO Chemicals GmbH) |
| WakoV65 | 2,2'-Azobis(2,4-dimethyl-valeronitril), (Fa. WAKO Chemicals GmbH) |
| Deloxan^{®} THP II | Metallfänger (Fa. Evonik Industries AG) |

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfo-phenyl)phos-phin Trinatriumsalz hinzugegeben und gerührt, dann 66 g Phosphin-säure in 66 g Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur unter Stickstoffatmosphäre gerührt, dann filtriert und das Filtrat mit Toluol extrahiert, danach wird am Rotationsverdampfer vom Lösungsmittel befreit und die erhaltene Ethylphosphonigsäure aufgefangen. Ausbeute: 92 g (98 % der Theorie).

### Beispiel 2

Wie in Beispiel 1 werden 99 g Phosphinsäure, 396 g Butanol, 42 g Ethylen, 6,9 mg Tris(dibenzylidenaceton)dipalladium und 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotrop-destillation entfernt. Das Produkt (Ethylphosphonigsäurebutylester) wird durch Destillation bei vermindertem Druck gereinigt. Ausbeute: 189 g (84 % der Theorie).

### Beispiel 3

Wie in Beispiel 1 werden 198 g Phosphinsäure, 198 g Wasser, 84 g Ethylen, 6,1 mg Palladium(II)sulfat und 25,8 mg 9,9-Dimethyl-4,5-bis(diphenylphosphino)-2,7-sulfonato-xanthen Dinatriumsalz umgesetzt, dann zur Reinigung über eine mit Deloxan^{®} THP II beschickte Säule gegeben und danach n-Butanol zugegeben. Bei einer Reaktions-temperatur von 80 - 110 °C wird das gebildete Wasser durch Azeotropdestillation entfernt. Das Produkt (Ethylphosphonigsäurebutylester) wird durch Destillation bei vermindertem Druck gereinigt. Ausbeute: 374 g (83 % der Theorie).

### Beispiel 4

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet, eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Es werden 129 g (94 % der Theorie) (Ethylphosphonigsäure-2-hydroxyethylester) als farbloses, wasserklares Produkt erhalten.

### Beispiel 5

In einem 1 I-5-Halskolben, ausgestattet mit Gaseinleitungs-Fritte, Thermometer, Rührer, Rückflusskühler und Initiatordosierung wird eine Lösung von 94,0 g Ethylphosphonig-säure (hergestellt wie in Beispiel 1) in 200 g Eisessig gelöst und auf ca. 90 °C erhitzt. Unter Rühren wird über einen Zeitraum von 5 h eine Lösung von 11,4 g Ammoniumper-oxodisulfat in 30 g Wasser zudosiert. Gleichzeitig wird über die Gaseinleitungsfritte ca. 10 l/h Acetylen durch die Lösung geleitet. Die Reaktionstemperatur wird dabei bei ca. 100 °C gehalten. Nach Entfernen des Acetylens mittels Durchleiten von Stickstoff lässt man abkühlen, wobei Ethylenbis(ethylphosphinsäure) in Form farbloser Kristalle ausfällt. Diese wird abfiltriert und mit Essigsäure gewaschen. Ausbeute: 86,7 g (81 % der Theorie).

### Beispiel 6

In einem 1l-5-Halskolben, ausgestattet mit Gaseinleitungs-Fritte, Thermometer, Rührer, Rückflusskühler und Initiatordosierung wird eine Lösung von 188,0 g Ethylphosphonig-säure (hergestellt wie in Beispiel 1) in 200 g Eisessig gelöst und auf ca. 90 °C erhitzt. Unter Rühren wird über einen Zeitraum von 6 h eine Lösung von 19 g 2,2'Azobis(2-methylbutyronitril) in 100 g Eisessig zudosiert. Gleichzeitig wird über die Gaseinlei-tungsfritte ca. 15 l/h Acetylen durch die Lösung geleitet. Die Reaktionstemperatur wird dabei bei ca. 100 °C gehalten. Nach Entfernen des Acetylens mittels Durchleiten von Stickstoff und lässt man abkühlen, wobei Ethylenbis(ethylphosphinsäure) ausfällt. Diese wird abfiltriert und mit Essigsäure gewaschen. Ausbeute: 177,6 g (83 % der Theorie).

### Beispiel 7

321 g (1,5 mol) Ethylenbis(ethylphosphinsäure) (hergestellt wie in Beispiel 5) werden bei 85 °C in 400 ml Toluol gelöst und mit 888 g (12 mol) Butanol versetzt. Bei einer Reaktionstemperatur von ca. 100 °C wird das gebildete Wasser durch Azeotrop-destillation entfernt. Nach Reinigung durch Chromatographie werden 401 g (83 % der Theorie) Ethylenbis(ethylphosphinsäurebutylester) erhalten.

### Beispiel 8

321 g (1,5 mol) Ethylenbis(ethylphosphinsäure) (hergestellt wie in Beispiel 6) werden bei 85 °C in 400 ml Toluol gelöst und mit 409 g (6,6 mol) Ethylenglykol versetzt und in einer Destillationsapparatur mit Wasserabscheider bei ca. 100 °C während 4 h verestert. Nach beendeter Veresterung wird das Toluol und überschüssiges Ethylglykol im Vakuum abgetrennt. Es werden 448 g (99 % der Theorie) Ethylenbis(ethylphos-phinsäure-2-hydroxyethylester) als farbloses Öl erhalten

### Beispiel 9

Zu 326 g (1 mol) Ethylenbis(ethylphosphinsäurebutylester) (hergestellt nach Beispiel 7) werden 155 g (2,5 mol) Ethylenglycol und 0,4 g Kaliumtitanyloxalat hinzugegeben und 2 h bei 200 °C gerührt. Durch langsames Evakuieren werden leicht flüchtige Anteile abdestilliert. Es werden 296 g (98 % der Theorie) Ethylenbis(ethylphosphinsäure-2-hydroxyethylester) erhalten.

### Beispiel 10

In einem 500 ml-Fünfhalskolben mit Gaseinleitungsrohr, Thermometer, Intensivrührer und Rückflusskühler mit Gasverbrennung werden 214 g (1 mol) Ethylenbis(ethyl-phosphinsäure) (hergestellt wie in Beispiel 6) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 64,8 g. Die Säurezahl des Produktes ist kleiner 1 mg KOH/g. Es werden 257 g (95 % der Theorie) Ethylenbis(ethylphosphinsäure-2-hydroxyethylester) als farbloses, wasserklare Flüssigkeit erhalten.

### Beispiel 11

642 g (3 mol) Ethylenbis(ethylphosphinsäure) (hergestellt wie in Beispiel 5) werden in 860 g Wasser gelöst und in einem 5 I-Fünfhalskolben mit Thermometer, Rückflusskühler, Intensivrührer und Tropftrichter vorgelegt und mit ca. 960 g (12 mol) 50 %ige Natriumhydroxid-Lösung neutralisiert. Bei 85 °C wird eine Mischung von 2583 g einer 46 %igen wässrigen Lösung von Al₂(SO₄)₃·14 H₂O zugefügt. Anschließend wird der erhaltene Feststoff abfiltriert, mit heißem Wasser gewaschen und bei 130 °C im Vakuum getrocknet. Ausbeute: 642 g (93 % der Theorie) Ethylenbis(ethylphosphinsäure) Aluminium(III)salz als farbloses Salz.

### Beispiel 12

214 g (1 mol) Ethylenbis(ethylphosphinsäure) (hergestellt wie in Beispiel 6) und 170 g Titantetrabutylat werden in 500 ml Toluol 40 Stunden unter Rückfluss erhitzt. Dabei entstehendes Butanol wird mit Anteilen an Toluol von Zeit zu Zeit abdestilliert. Die entstandene Lösung wird anschließend vom Lösungsmittel befreit. Man erhält 229 g Ethylenbis(ethylphosphinsäure) Titansalz.

### Beispiel 13

Es werden zu 39,1 g Ethylenbis(ethylphosphinsäure-2-hydroxyethylester) (hergestellt wie in Beispiel 10), 290 g Terephthalsäure, 188 g Ethylenglycol und 0,34 g Zinkacetat gegeben und 2 h auf 200 °C erhitzt. Dann werden 0,29 g Trinatriumphosphatanhydrat und 0,14 g Antimon(III)oxid hinzugegeben, auf 280 °C erhitzt und danach evakuiert.

Aus der erhaltenen Schmelze (363 g, Phosphorgehalt: 2,2 %) werden Probekörper der Dicke 1,6 mm für die Messung des Sauerstoffindexes (LOI) nach ISO 4589- 2 als auch für den Brandtest UL 94 (Underwriter Laboratories) gespritzt.

Die so hergestellten Probekörper ergaben einen LOI von 42 und erfüllten nach UL 94 die Brandklasse V-0. Entsprechende Probekörper ohne Ethylenbis(ethylphosphinsäure-2-hydroxyethylester) ergaben einen LOI von nur 31 und erfüllten nach UL 94 nur die Brandklasse V-2. Der Ethylenbis(ethylphosphinsäure-2-hydroxyethylester) enthaltende Polyester-Formkörper zeigt damit eindeutig flammschützende Eigenschaften.

### Beispiel 14

Zu 19,6 g Ethylenbis(ethylphosphinsäure) (hergestellt analog Beispiel 5) werden 12,9 g 1,3-Propylenglycol zugegeben und bei 160 °C das bei der Veresterung gebildete Wasser abgezogen. Dann werden 378 g Dimethylterephthalat, 192 g 1,3-Propandiol, 0,22 g Tetrabutylitanat und 0,05 g Lithiumacetat zugegeben und die Mischung zunächst 2 h unter Rühren auf 130 bis 180 °C erhitzt, danach bei Unterdruck auf 270 °C. Das Polymer (418 g) enthält 1,4 % Phosphor, der LOI beträgt 38.

### Beispiel 15

Zu 19,7 g Ethylenbis(ethylphosphinsäure) (hergestellt wie in Beispiel 6) werden 367 g Dimethylterephthalat, 238 g 1,4-Butandiol, 0,22 g Tetrabutylitanat und 0,05 g Lithiumacetat zugegeben und die Mischung zunächst 2 h lang unter Rühren auf 130 bis 180 °C erhitzt, danach bei Unterdruck auf 270 °C. Das Polymer (432 g) enthält 1,3 % Phosphor, der LOI beträgt 34, der von unbehandeltem Polybutylenterephthalat nur 23.

### Beispiel 16

In einem 250 ml-Fünfhalskolben mit Rückflusskühler, Rührer, Thermometer und Stickstoffeinleitung werden 100 g eines Bisphenol-A-bisglycidethers mit einem Epoxidwert von 0,55 mol/100 g (Beckopox EP 140, Fa. Solutia) und 13,9 g (0,13 mol) Ethylenbis(ethylphosphinsäure) (hergestellt analog Beispiel 5) unter Rühren auf maximal 150 °C erhitzt. Nach 30 min ergibt sich eine klare Schmelze. Nach einer weiteren Stunde Rühren bei 150 °C wird die Schmelze abgekühlt und gemörsert. Man erhält 117,7 g eines weißen Pulvers mit einem Phosphorgehalt von 3,5 Gew.-%.

### Beispiel 17

In einem 2 I-Kolben mit Rührer, Wasserabscheider, Thermometer, Rückflusskühler und Stickstoffeinleitung werden 29,4 g Phthalsäureanhydrid, 19,6 g Maleinsäureanhydrid, 24,8 g Propylenglycol, 20,4 g

Ethylenbis(ethylphosphinsäure-2-hydroxyethylester) (hergestellt wie in Beispiel 10), 20 g Xylol und 50 mg Hydrochinon unter Rühren und Durchleiten von Stickstoff auf 100 °C erhitzt. Bei Einsetzen der exothermen Reaktionwird die Heizung entfernt. Nach Abklingen der Reaktion wird weiter bei ca. 190 °C gerührt. Nachdem 14 g Wasser abgeschieden sind, wird das Xylol abdestilliert und die Polymerschmelze abgekühlt. Man erhält 86,2 g eines weißen Pulvers mit einem Phosphorgehalt von 4,8 Gew.-%.

### Beispiel 18

Eine Mischung von 50 Gew.-% Polybutylenterephthalat, 20 Gew.-% 3-Ethylenbis(ethyl-phosphinsäure) Aluminium(III)salz (hergestellt wie in Beispiel 11) und 30 Gew.-% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wird abgezogen, im Wasserbad gekühlt und anschließend granuliert. Nach Trocknung werden die Formmassen auf einer Spritzgießmaschine (Typ Aarburg Allrounder) bei 240 bis 270 °C zu Polymerformkörper verarbeitet und eine UL-94 Klassifizierung von V-0 bestimmt.

### Beispiel 19

Eine Mischung von 53 Gew.-% Polyamid 6.6, 30 Gew.-% Glasfasern und 17 Gew.-% 3-Ethylenbis(ethylphosphinsäure) Titansalz (hergestellt wie in Beispiel 12) werden auf einem Doppelschnecken-Extruder (Typ Leistritz LSM 30/34) zu Polymerformmassen compoundiert. Der homogenisierte Polymerstrang wird abgezogen, im Wasserbad gekühlt und anschließend granuliert. Nach Trocknung werden die Formmassen auf einer Spritzgießmaschine (Typ Aarburg Allrounder) bei 260 bis 290 °C zu Polymerformkörpern verarbeitet und eine UL-94 Klassifizierung von V-0 erhalten.

Mit den weiter vorne beschriebenen Epoxidharz-Formulierungen wurden sogenannte Polymerformkörper hergestellt. Dazu werden die einzelnen Komponenten abgewogen und in einem geeigneten Gefäß bei hoher Rührgeschwindigkeit miteinander gemischt. Bei Raumtemperatur feste Harze werden vorher aufgeschmolzen. Nach dem Mischen wird durch Anlegen von Vakuum die Harzmischung entgast.

Die fertige Harzmischung wird in eine geeignete Gussform gegeben und bei Raumtemperatur oder im Trockenschrank ausgehärtet. Die Dicke der hergestellten Polymerformkörper lag bei 3 mm bzw. 1,6 mm.

Neben der Brennbarkeitsklasse nach UL 94 wurden an den hergestellten Polymerformkörper bevorzugt die Schlagzähigkeit nach Charpy und die Hydrolysebeständigkeit geprüft.

Zur Bestimmung der Hydrolysebeständigkeit wurden Polymerformkörper jeweils für 24 h bei 100 °C in 80 ml Wasser gelagert. Nach der Lagerung wurde der Phosphor-Gehalt des Wassers bestimmt.

Bei den durchgeführten Untersuchungen wurde gefunden, dass die Ethlyendiethylphosphinsäure neben der sehr guten Flammschutzwirkung auch die Sprödigkeit der ausgehärteten Epoxidharz-Matrix verringert und bei der Wasserlagerung nicht hydrolysiert wird.

Nachfolgend wird das Ergebnis durch zusätzliche Beispiele erläutert:

Zur Herstellung der flammgeschützten Epoxidharz-Formulierungen wurden folgende Verbindungen eingesetzt:
- Beckopox^{®} EP 140 (BPA-EP-Harz, Solutia, United States)
- PF^{®} 0790 K04 (Phenol-Novolak, Hexion Chemical,United States)
- 2-Phenylimidazol (Degussa/Trostberg, Germany)
- TS^{®}-601 (Aluminiumtriyhdroxid, Martinswerk, Germany)
- DOPO^{®}-HQ (10-(2,5-dihydroxyphenyl)-10H-9-oxa-10-phospha-phenanthren-10-oxid,Sanko Co., Ltd., Japan)

### Beispiel 20:

### a) Herstellung eines phosphormodifizierten Epoxidharzes auf Basis von Ethlyendiethylphosphinsäure

In einem Vierhalskolben, ausgerüstet mit Rückflusskühler, Thermoelement, Stickstoffzuleitung und Rührer, werden 100 g Beckopox^{®} EP 140, EP-Wert 180 g/mol, vorgelegt. Unter Rühren wird auf 110 °C aufgeheizt und unter Vakuum restliches Wasser entfernt, dann mit trockenem Stickstoff belüftet. Danach wird die Temperatur im Kolben auf 130 °C erhöht und 11,7 g Ethan-bisethylphosphinsäure unter Rühren und Stickstoffdurchfluss zugegeben. Die Temperatur der Reaktionsmischung wird auf 160 °C erhöht und für 1 h gehalten. Das Produkt wird anschließend heiß ausgegossen und abgekühlt. Es wurde ein phosphormodifiziertes Epoxidharz mit einem P-Gehalt von 3 % und einem EPÄ von 267 g/mol erhalten.

Der Anteil an Phosphor im Epoxidharz wurde durch unterschiedliche Mengen an Ethanbisethylphosphinsäure bei der Synthese entsprechend variiert (Beispiele 20 a) 1 - a) 4).

### b) Herstellung eines phosphormodifizierten Epoxidharzes auf Basis von DOPO-HCA (Vergleichsbeispiel, 20 b))

In einem Vierhalskolben, ausgerüstet mit Rückflusskühler, Thermoelement, Stickstoffzuleitung und Rührer, werden 100 g Beckopox^{®} EP 140, EP-Wert 180 g/mol, vorgelegt. Unter Rühren wird auf 110 °C aufgeheizt und unter Vakuum restliches Wasser entfernt, dann mit trockenem Stickstoff belüftet. Danach wird die Temperatur im Kolben auf 130 °C erhöht und 19 g DOPO(HCA-HQ) unter Rühren und Stickstoffdurchfluß zugegeben. Die Temperatur der Reaktionsmischung wird auf 160 °C erhöht und dort für 2,5 h gehalten. Das Produkt wird anschließend heiß ausgegossen und abgekühlt. Es wurde ein phosphormodifiziertes Epoxidharz mit einem P-Gehalt von 1,5 % und einem EPÄ von 286 g/mol erhalten.

Tabelle 1 zeigt die Kombination der Ethanbisethylphosphinsäure mit einem Bisphenol-A-Novolak als Härter sowie in einem Beispiel mit einem zusätzlichen Flammschutzmittel. Als Beschleuniger wurde 2-Phenylimidazol verwendet.

Wie aus Tabelle 1 entnommen werden kann, wurde bei einer Konzentration von im P-Harz eine VO-Einstufung sowohl bei 3 mm auch als auch bei 1, 6 mm Dicke erreicht. Die Schlagzähigkeiten der mit diesen Formulierungen hergestellten Polymerformkörper lag immer auf einem höheren Niveau im Vergleich zumr Referenzbeispiel. In dem zur Hydrolyse verwendeten Wasser wurde zudem kein Phosphor gefunden. Demnach wird die Ethanbisethylphosphinsäure bei der Wasserlagerung nicht hydrolisiert und anschließend aus dem duroplastischen Netzwerk herausgewaschen.

**Tabelle 1**

| | | Beispiel 20 | | | | |
|---|---|---|---|---|---|---|
| | | a) 1 | a) 2 | a) 3 | a) 4 | b)(V)* |
| Harzformulierung | P-modifiziertes EP-Harz auf Basis Ethan-bis (ethyl-phosphinsäure) | 100 | 100 | 100 | 100 | - |
| | P-modifiziertes EP-Harz auf Basis DOPO-HQ | - | - | - | - | 100 |
| | Phenol-Novolak | 34 | 43 | 46 | 46 | 37 |
| | 2-Phenylimidazol | 0,03 | 0,03 | 0,03 | 0,03 | 0,03 |
| | Aluminium-trihydroxid (TS601) | - | - | - | 25 | - |
| Eigenschaften des Polymerformkörpers | P-Gehalt in der Prüfplatte [%] | 2,6 | 1,8 | 1,3 | 1,3 | 1,1 |
| | Schlagzähigkeit nach Charpy [kJ/cm2] | 50 | 44 | 35 | 30 | 26 |
| | P-Gehalt Wasser nach Lagerung bei 100°C [ppm] | <1 | <1 | <1 | <1 | <1 |
| | UL 94 | V0 | V0 | V1 | V0 | V0 |

| | | | | | | |
|---|---|---|---|---|---|---|
| * (V) = Vergleichsbeispiel | | | | | | |

## Patentansprüche

1. Verfahren zur Herstellung von Ethylendialkylphosphinsäuren, -estern und -salzen, **dadurch gekennzeichnet, dass** man
a) eine Phosphinsäurequelle (I) 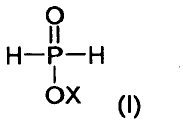 mit Olefinen (IV) 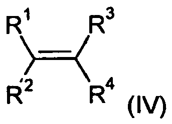 in Gegenwart eines Katalysators A zu einer Alkylphosphonigsäure, deren Salz oder Ester (II) 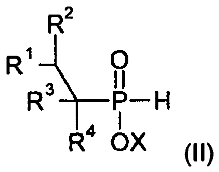 umsetzt,
b) die so entstandene Alkylphosphonigsäure, deren Salz oder Ester (II) mit 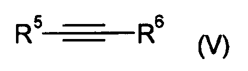 acetylenischen Verbindung (V)
in Gegenwart eines Katalysators B zum Ethylendialkylphosphinsäurederivat (III) 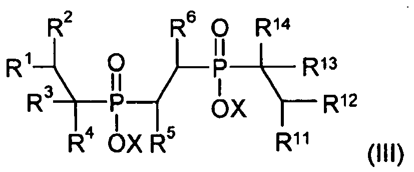 umsetzt oder die nach Schritt a) erhaltene Alkylphosphonigsäure, deren Salz oder Ester (II) und/oder die nach Schritt b) erhaltene Ethylendialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II) und/oder Ethylendialkylphosphinsäureester (III) dem weiteren Reaktionsschritt b) unterwirft, wobei R¹, R², R³, R⁴, R⁵, R⁶, R¹¹, R¹², R¹³, R¹⁴ gleich oder verschieden sind und unabhängig voneinander H, C₁-C₁₈-Alkyl, C₆-C₁₈-Aryl, C₆-C₁₈-Aralkyl, C₆-C₁₈-AlkylAryl, wobei die Gruppen C₆-C₁₈-Aryl, C₆-C₁₈-Aralkyl und C₆-C₁₈-Alkyl-Aryl mit
- C(O)CH₃, OH, CH₂OH, NH₂, NO₂, OCH₃, SH und/oder OC(O)CH₃ substituiert sein können, CN, CHO, OC(O)CH₂CN, CH(OH)C₂H₅, CH₂CH(OH)CH₃,
9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, C(O)R⁷, CH=CH-R⁷, CH=CH-C(O)R⁷ bedeuten und wobei R⁷ für C₁-C₈-Alkyl oder C₆-C₁₈-Aryl steht und m eine ganze Zahl von 0 bis 10 bedeutet und X für H, C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂ steht wobei k eine ganze Zahl von 0 bis 10 ist und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen handelt.

2. Verfahren nach Anspruch 1, **dadurch gekennzeichnet, dass** man die nach Schritt b) erhaltene Ethylendialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden Ethylendialkylphosphinsäuresalzen (III) dieser Metalle und/oder einer Stickstoffverbindung umsetzt.

3. Verfahren nach Anspruch 1 oder 2, **dadurch gekennzeichnet, dass** R¹, R², R³, R⁴, R⁵, R⁶, R¹¹, R¹², R¹³, R¹⁴ gleich oder verschieden sind und, unabhängig voneinander H, Methyl, Ethyl, n-Propyl, Isopropyl, n-Butyl, Isobutyl, tert. Butyl und/oder Phenyl bedeuten.

4. Verfahren nach einem oder mehreren der Ansprüche 1 bis 3, **dadurch gekennzeichnet, dass** X H, Ca, Mg, Al, Zn, Ti, Mg, Ce, Fe, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeutet.

5. Verfahren nach einem oder mehreren der Ansprüche 1 bis 4, **dadurch gekennzeichnet, dass** es sich bei den Übergangsmetallen und/oder Übergangsmetallverbindungen um solche aus der siebten und achten Nebengruppe handelt.

6. Verfahren nach einem oder mehreren der Ansprüche 1 bis 5, **dadurch gekennzeichnet, dass** es sich bei den Übergangsmetallen und/oder Übergangsmetallverbindungen um Rhodium, Nickel, Palladium, Platin und/oder Ruthenium handelt.

7. Verfahren nach einem oder mehreren der Ansprüche 1 bis 6, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid handelt.

8. Verfahren nach einem oder mehreren der Ansprüche 1 bis 7, **dadurch gekennzeichnet, dass** es sich bei der acetylenischen Verbindung (V) um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin-1-ol, 1-Octin-3-ol, 1-Pentin, Phenylacetylen und/oder Trimethyl-silylacetylen handelt.

9. Verfahren nach einem oder mehreren der Ansprüche 1 bis 8, **dadurch gekennzeichnet, dass** es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈ handelt.

10. Herstellung von Ethylendialkylphosphinsäuren, -estern und -salzen, nach einem oder mehreren der Ansprüche 1 bis 9 und anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

11. Herstellung Ethylendialkylphosphinsäuren, -salzen und -estern, nach einem oder mehreren der Ansprüche 1 bis 9 und anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

12. Herstellung von Ethylendialkylphosphinsäuren, -estern und -salzen, nach einem oder mehreren der Ansprüche 1 bis 9 und anschließende Verwendung dieser Produkte als Flammschutzmittel beim Herstellen oder Aushärten von Epoxidharzen, Polyurethanen und ungesättigten Polyesterharzen für Elektronikanwendungen.

13. Herstellung nach Anspruch 12, **dadurch gekennzeichnet, dass** die Epoxyharze, Polyurethane und ungesättigten Polyesterharze als Polymerformkörper vorliegen.

14. Herstellung nach Anspruch 12 oder 13, **dadurch gekennzeichnet, dass** die Polymerformkörper weiterhin Härter, UV-Stabilisatoren, Flexibilisatoren und/oder andere Zusätze enthalten.

15. Herstellung nach einem oder mehreren der Ansprüche 12 bis 14, **dadurch gekennzeichnet, dass** die Ethylendialkylphosphinsäuren der Formel (III) entsprechen 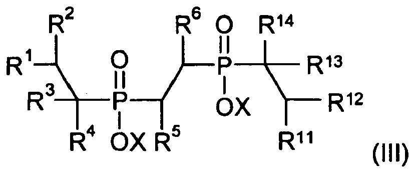 worin R¹, R², R³, R⁴, R⁵, R⁶, R¹¹, R¹², R¹³, R¹⁴ gleich oder verschieden sind und unabhängig voneinander H, C₁-C₁₈-Alkyl bedeuten und X die gleiche Bedeutung wie in Anspruch 1 hat.

16. Herstellung nach einem oder mehreren der Ansprüche 12 bis 15, **dadurch gekennzeichnet, dass** es sich bei der Ethylendialkylphosphinsäure um Ethlyendiethylphosphinsäure handelt.

## Claims

1. A process for preparing ethylenedialkylphosphinic acids, esters and salts, which comprises
a) reacting a phosphinic acid source (I) 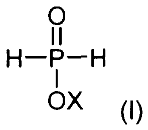 with olefins (IV) 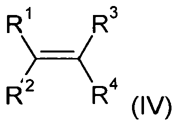 in the presence of a catalyst A to give an alkylphosphonous acid (II), or salt or ester thereof, 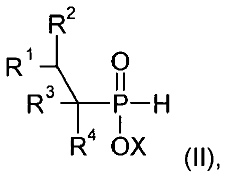
b) reacting the alkylphosphonous acid (II), or salt or ester thereof, thus formed with an acetylenic compound (V) 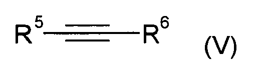 in the presence of a catalyst B to give the ethylenedialkylphosphinic acid derivative (III) 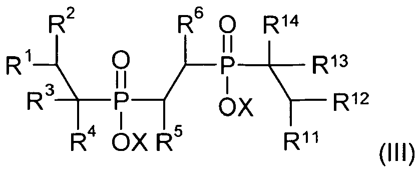
the alkylphosphonous acid (II), or salt or ester thereof, obtained after step a) and/or the ethylenedialkylphosphinic acid (III), or salt or ester thereof, obtained after step b) and/or the reaction solution thereof which results in each case is esterified with an alkylene oxide or an alcohol M-OH and/or M'-OH, and the alkylphosphonous ester (II) and/or ethylenedialkylphosphinic ester (III) formed in each case is subjected to the further reaction step b),
where R¹, R², R³, R⁴, R⁵, R⁶, R¹¹, R¹², R¹³, R¹⁴ are the same or different and are each independently H, C₁-C₁₈-alkyl, C₆-C₁₈-aryl, C₆-C₁₈-aralkyl, C₆-C₁₈-alkylaryl, where the C₆-C₁₈-aryl, C₆-C₁₈-aralkyl and C₆-C₁₈-alkylaryl groups may have substitution by -C(O)CH₃, OH, CH₂OH, NH₂, NO₂, OCH₃, SH and/or OC(O)CH₃, CN, CHO, OC(O)CH₂CN, CH(OH)C₂H₅, CH₂CH(OH)CH₃, 9-anthracene, 2-pyrrolidone, (CH₂)ₘOH, (CH₂)ₘNH₂, (CH₂)ₘNCS, (CH₂)ₘNC(S)NH₂, (CH₂)ₘSH, (CH₂)ₘS-2-thiazoline, C(O)R⁷, CH=CH-R⁷, CH=CH-C(O)R⁷, and where R⁷ is C₁-C₈-alkyl or C₆-C₁₈-aryl, and m is an integer from 0 to 10, and X is H, C₁-C₁₈-alkyl, C₆-C₁₈-aryl, C₆-C₁₈-aralkyl, C₆-C₁₈-alkylaryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂, where k is an integer from 0 to 10, and/or is Mg, Ca, Al, Sb, Sn, Ge, Ti, Fe, Zr, Zn, Ce, Bi, Sr, Mn, Cu, Ni, Li, Na, K, H, and/or is a protonated nitrogen base, and the catalyst A comprises transition metals and/or transition metal compounds and/or catalyst systems composed of a transition metal and/or a transition metal compound and at least one ligand, and the catalyst B comprises peroxide-forming compounds and/or peroxo compounds and/or azo compounds.

2. The process as claimed in claim 1, wherein the ethylenedialkylphosphinic acid (III), or salt or ester thereof, obtained after step b) is subsequently reacted, in a step c), with metal compounds of Mg, Ca, Al, Sb, Sn, Ge, Ti, Fe, Zr, Zn, Ce, Bi, Sr, Mn, Li, Na, K and/or a protonated nitrogen base to give the corresponding ethylenedialkylphosphinic salts (III) of these metals and/or a nitrogen compound.

3. The process as claimed in claim 1 or 2, wherein R¹, R², R³, R⁴, R⁵, R⁶, R¹¹, R¹², R¹³, R¹⁴ are the same or different and are each independently H, methyl, ethyl, n-propyl, isopropyl, n-butyl, isobutyl, tert-butyl and/or phenyl.

4. The process as claimed in one or more of claims 1 to 3, wherein X is H, Ca, Mg, Al, Zn, Ti, Mg, Ce, Fe, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol.

5. The process as claimed in one or more of claims 1 to 4, wherein the transition metals and/or transition metal compounds are those from the seventh and eighth transition groups.

6. The process as claimed in one or more of claims 1 to 5, wherein the transition metals and/or transition metal compounds are rhodium, nickel, palladium, platinum and/or ruthenium.

7. The process as claimed in one or more of claims 1 to 6, wherein the catalyst B is hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid and/or azodiisobutyronitrile, 2,2'-azobis(2-amidinopropane) dihydrochloride and/or 2,2'-azobis(N,N'-dimethylene-isobutyramidine) dihydrochloride.

8. The process as claimed in one or more of claims 1 to 7, wherein the acetylenic compound (V) is acetylene, methylacetylene, 1-butyne, 1-hexyne, 2-hexyne, 1-octyne, 4-octyne, 1-butyn-4-ol, 2-butyn-1-ol, 3-butyn-1-ol, 5-hexyn-1-ol, 1-octyn-3-ol, 1-pentyne, phenylacetylene and/or trimethylsilylacetylene.

9. The process as claimed in one or more of claims 1 to 8, wherein the alcohol of the general formula M-OH comprises linear or branched, saturated and unsaturated, monohydric organic alcohols having a carbon chain length of C₁-C₁₈, and the alcohol of the general formula M'-OH comprises linear or branched, saturated and unsaturated, polyhydric organic alcohols having a carbon chain length of C₁-C₁₈.

10. The preparation of ethylenedialkylphosphinic acids, esters and salts as claimed in one or more of claims 1 to 9 and subsequent use of these products as an intermediate for further syntheses, as a binder, as a crosslinker or accelerator in the curing of epoxy resins, polyurethanes and unsaturated polyester resins, as polymer stabilizers, as crop protection agents, as a sequestrant, as a mineral oil additive, as an anticorrosive, in washing and cleaning composition applications and in electronics applications.

11. The preparation of ethylenedialkylphosphinic acids, salts and esters as claimed in one or more of claims 1 to 9 and subsequent use of these products as flame retardants, especially as flame retardants for clearcoats and intumescent coatings, as flame retardants for wood and other cellulosic products, as a reactive and/or nonreactive flame retardant for polymers, for production of flame-retardant polymer molding materials, for production of flame-retardant polymer moldings, and/or for rendering pure and blended polyester and cellulose fabrics flame-retardant by impregnation.

12. The preparation of ethylenedialkylphosphinic acids, esters and salts as claimed in one or more of claims 1 to 9 and subsequent use of these products as flame retardants in the production or curing of epoxy resins, polyurethanes and unsaturated polyester resins for electronics applications.

13. The preparation as claimed in claim 12, wherein the epoxy resins, polyurethanes and unsaturated polyester resins are in the form of polymer moldings.

14. The preparation as claimed in claim 12 or 13, wherein the polymer moldings further comprise hardeners, UV stabilizers, flexibilizers and/or other additives.

15. The preparation as claimed in one or more of claims 12 to 14, wherein the ethylenedialkylphosphinic acids correspond to the formula (III) 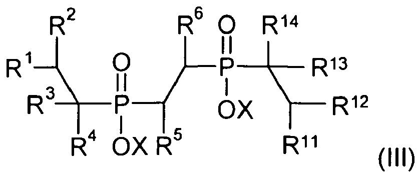 in which R¹, R², R³, R⁴, R⁵, R⁶, R¹¹, R¹², R¹³, R¹⁴ are the same or different and are each independently H, C₁-C₁₈-alkyl, and X is as defined in claim 1.

16. The preparation as claimed in one or more of claims 12 to 15, wherein the ethylenedialkylphosphinic acid is ethylenediethylphosphinic acid.

## Revendications

1. Procédé pour la préparation d'acides éthylènedialkylphosphiniques, d'esters et de sels d'acides éthylènedialkylphosphiniques, **caractérisé en ce qu'**on
a) transforme une source d'acide phosphinique (I) 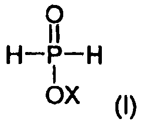 avec des oléfines (IV) 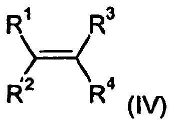 en présence d'un catalyseur A en acide alkylphosphoneux, son sel ou son ester (II) 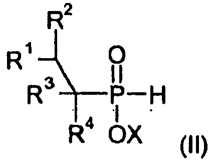
b) on transforme l'acide alkylphosphoneux, son sel ou son ester (II) ainsi formé avec un composé acétylénique (V) 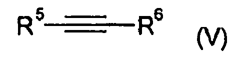 en présence d'un catalyseur B en dérivé d'acide éthylènedialkylphosphinique (III) 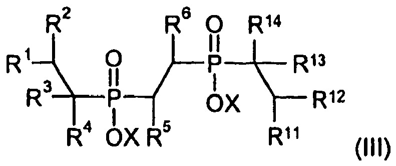 ou on estérifie l'acide alkylphosphoneux, son sel ou son ester (II) obtenu après l'étape a) et/ou l'acide éthylènedialkylphosphinique, son sel ou son ester (III) obtenu après l'étape b) et/ou la solution réactionnelle à chaque fois résultante de ceux-ci avec un oxyde d'éthylène ou un alcool M-OH et/ou M'-OH, et on soumet l'ester de l'acide alkylphosphoneux (II) et/ou l'ester de l'acide éthylènedialkylphosphinique (III) à chaque fois obtenu à l'autre étape de réaction b), R¹, R², R³, R⁴, R⁵, R⁶, R¹¹, R¹², R¹³, R¹⁴ étant identiques ou différents et signifiant, indépendamment les uns des autres, H, C₁-C₁₈-alkyle, C₆-C₁₈-aryle, C₆-C₁₈-aralkyle, C₆-C₁₈-alkyl-aryle, les groupes C₆-C₁₈-aryle, C₆-C₁₈-aralkyle et C₆-C₁₈-alkyl-aryle pouvant être substitués par -C(O)CH₃, OH, CH₂OH, NH₂, NO₂, OCH₃, SH et/ou OC(O)CH₃ ; signifiant CN, CHO, OC(O)CH₂CN, CH(OH)C₂H₅, CH₂CH(OH)CH₃, 9-anthracène, 2-pyrrolidone, (CH₂)ₘOH, (CH₂)ₘNH₂, (CH₂)ₘNCS, (CH₂)ₘNC(S)NH₂, (CH₂)ₘSH, (CH₂)ₘS-2-thiazoline, C(O)R⁷, CH=CH-R⁷, CH=CH-C(O)R⁷, et R⁷ représentant C₁-C₈-alkyle ou C₆-C₁₈-aryle et m signifiant un nombre entier de 0 à 10 et X représentant H, C₁-C₁₈-alkyle, C₆-C₁₈-aryle, C₆-C₁₈-aralkyle, C₆-C₁₈-alkyl-aryle, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyle, (CH₂-C[CH₃]HO)ₖ-alkyle, (CH₂-C[CH₃]HO)ₖ(CH₂-CH₂O)ₖ-alkyle, (CH₂-CH₂O)ₖ(CH₂-C[CH₃]HO)O-alkyle, (CH₂)ₖ-CH=CH(CH₂)ₖH, (CH₂)ₖNH₂, (CH₂)ₖN[(CH₂)ₖH]₂, k représentant un nombre entier de 0 à 10 et/ou représentant Mg, Ca, Al, Sb, Sn, Ge, Ti, Fe, Zr, Zn, Ce, Bi, Sr, Mn, Cu, Ni, Li, Na, K, H et/ou une base azotée protonée et pour le catalyseur A, il s'agit de métaux de transition et/ou de composés de métal de transition et/ou de systèmes catalytiques composés d'un métal de transition et/ou d'un composé de métal de transition et d'au moins un ligand et pour le catalyseur B, il s'agit de composés formant des peroxydes et/ou de composés peroxo et/ou de composés azo.

2. Procédé selon la revendication 1, **caractérisé en ce qu'**on transforme ensuite l'acide éthylènedialkylphosphinique, son sel ou son ester (III) obtenu après l'étape b) dans une étape c) avec des composés métalliques de Mg, Ca, Al, Sb, Sn, Ge, Ti, Fe, Zr, Zn, Ce, Bi, Sr, Mn, Li, Na, K et/ou une base azotée protonée en sels d'acide éthylènedialkylphosphinique (III) correspondant de ces métaux et/ou d'un composé azoté.

3. Procédé selon la revendication 1 ou 2, **caractérisé en ce que en ce que** R¹, R², R³, R⁴, R⁵, R⁶, R¹¹, R¹², R¹³, R¹⁴ sont identiques ou différents et signifient, indépendamment les uns des autres, H, méthyle, éthyle, n-propyle, iso-propyle, n-butyle, iso-butyle, tert-butyle et/ou phényle.

4. Procédé selon l'une ou plusieurs des revendications 1 à 3, **caractérisé en ce que** X signifie H, Ca, Mg, Al, Zn, Ti, Mg, Ce, Fe, méthyle, éthyle, n-propyle, iso-propyle, n-butyle, isobutyle, tert-butyle, phényle, éthylèneglycol, propylglycol, butylglycol, pentylglycol, hexylglycol, allyle et/ou glycérol.

5. Procédé selon l'une ou plusieurs des revendications 1 à 4, **caractérisé en ce qu'**il s'agit, pour les métaux de transition et/ou les composés de métal de transition de ceux du septième et huitième groupe secondaire.

6. Procédé selon l'une ou plusieurs des revendications 1 à 5, **caractérisé en ce qu'**il s'agit, pour les métaux de transition et/ou les composés de métal de transition, de rhodium, de nickel, de palladium, de platine et/ou de ruthénium.

7. Procédé selon l'une ou plusieurs des revendications 1 à 6, **caractérisé en ce qu'**il s'agit, pour le catalyseur B, de peroxyde d'hydrogène, de peroxyde de sodium, de peroxyde de lithium, de persulfate de potassium, de persulfate de sodium, de persulfate d'ammonium, de peroxodisulfate de sodium, de peroxoborate de potassium, d'acide peracétique, de peroxyde de benzoyle, de peroxyde de di-t-butyle et/ou d'acide peroxodisulfurique et/ou d'azodiisobutyronitrile, de dichlorhydrate de 2,2'-azobis(2-amidinopropane) et/ou de dichlorhydrate de 2,2'-azobis(N,N'-diméthylène-isobutyramidine).

8. Procédé selon l'une ou plusieurs des revendications 1 à 7, **caractérisé en ce qu'**il s'agit, pour le composé acétylénique (V), d'acétylène, de méthylacétylène, de 1-butyne, de 1-hexyne, de 2-hexyne, de 1-octyne, de 4-octyne, de 1-butyn-4-ol, de 2-butyn-1-ol, de 3-butyn-1-ol, de 5-hexyn-1-ol, de 1-octyn-3-ol, de 1-pentyne, de phénylacétylène et/ou de triméthylsilylacétylène.

9. Procédé selon l'une ou plusieurs des revendications 1 à 8, **caractérisé en ce qu'**il s'agit, pour l'alcool de formule générale M-OH, d'alcools organiques linéaires ou ramifiés, saturés et insaturés, monovalents, présentant une longueur de chaîne carbonée de C₁-C₁₈ et il s'agit, pour l'alcool de formule générale M'-OH, d'alcools organiques linéaires ou ramifiés, saturés et insaturés, polyvalents présentant une longueur de chaîne carbonée de C₁-C₁₈.

10. Préparation d'acides éthylènedialkylphosphiniques, d'esters et de sels d'acides éthylènedialkylphosphiniques selon l'une ou plusieurs des revendications 1 à 9 et utilisation consécutive de ces produits comme produit intermédiaire pour d'autres synthèses, comme liant, comme réticulant ou, selon le cas, accélérateur lors du durcissement de résines époxy, de polyuréthanes et de résines de polyester insaturées, comme stabilisants de polymères, comme agents de phytoprotection, comme agents de séquestration, comme additif d'huile minérale, comme agent de protection contre la corrosion, dans des utilisations d'agents de lavage et de nettoyage et dans des applications électroniques.

11. Préparation d'acides éthylènedialkylphosphiniques, d'esters et de sels d'acides éthylènedialkylphosphiniques selon l'une ou plusieurs des revendications 1 à 9 et utilisation consécutive de ces produits comme agents ignifuges, en particulier comme agents ignifuges pour des laques claires et des revêtements intumescents, comme agents ignifuges pour bois et d'autres produits contenant de la cellulose, comme agents ignifuges réactifs et/ou non réactifs pour polymères, pour la préparation de masses de moulage ignifugées, pour la préparation de corps façonnés polymères ignifugés et/ou pour l'apprêt inhibant les flammes de polyesters et de tissus en cellulose pure et de tissus mixtes par imprégnation.

12. Préparation d'acides éthylènedialkylphosphiniques, d'esters et de sels d'acides éthylènedialkylphosphiniques selon l'une ou plusieurs des revendications 1 à 9 et utilisation consécutive de ces produits comme agents ignifuges lors de la préparation ou du durcissement de résines époxydes, de polyuréthanes et de résines de polyester insaturées pour des applications électroniques.

13. Préparation selon la revendication 12, **caractérisée en ce que** les résines époxy, les polyuréthanes et les résines de polyester insaturées se trouvent sous forme de corps façonnés polymères.

14. Préparation selon la revendication 12 ou 13, **caractérisée en ce que** les corps façonnés polymères contiennent en outre des durcisseurs, des stabilisants des UV, des flexibilisants et/ou d'autres additifs.

15. Préparation selon l'une ou plusieurs des revendications 12 à 14, **caractérisée en ce que** les acides éthylènedialkylphosphiniques correspondent à la formule (III) 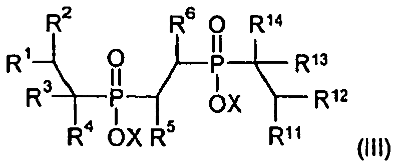 dans laquelle R¹, R², R³, R⁴, R⁵, R⁶, R¹¹, R¹², R¹³, R¹⁴ sont identiques ou différents et signifient, indépendamment les uns des autres, H, C₁-C₁₈-alkyle et X a la même signification que dans la revendication 1.

16. Préparation selon l'une ou plusieurs des revendications 12 à 15, **caractérisée en ce qu'**il s'agit, pour l'acide éthylènedialkylphosphinique, de l'acide éthylènediéthylphosphinique.
